Europäisches Patentamt

European Patent Office

Office européen des brevets

(11) Veröffentlichungsnummer : **0 159 468**
**B1**

(12) EUROPÄISCHE PATENTSCHRIFT

(45) Veröffentlichungstag der Patentschrift :
05.04.89

(51) Int. Cl.⁴ : **B 01 D 53/36,** F 01 N 7/16

(21) Anmeldenummer : 85100839.1

(22) Anmeldetag : 28.01.85

(54) Hochtemperaturfester Abgaskatalysator-Trägerkörper aus Stahlblechen, mit hohem Aluminiumanteil und Verfahren zu seiner Herstellung.

(30) Priorität : 25.04.84 DE 3415460

(43) Veröffentlichungstag der Anmeldung :
30.10.85 Patentblatt 85/44

(45) Bekanntmachung des Hinweises auf die Patenterteilung : 05.04.89 Patentblatt 89/14

(84) Benannte Vertragsstaaten :
AT BE CH DE FR GB IT LI LU NL SE

(56) Entgegenhaltungen :
EP-A- 0 022 063
EP-A- 0 056 604
DE-A- 2 924 592
DE-A- 3 340 987
FR-A- 2 511 396
PATENT ABSTRACTS OF JAPAN, Band 8, Nr. 52 (C-213)[1489], 9. März 1984; & JP - A - 58 210 146 (FURUKAWA ARUMINIUMU KOGYO K.K.) 07-12-1983

(73) Patentinhaber : INTERATOM Gesellschaft mit beschränkter Haftung
Friedrich-Ebert-Strasse
D-5060 Bergisch-Gladbach 1 (DE)

(72) Erfinder : Cyron, Theodor, Dipl.-Ing.
Hüttenfeld 1
D-5060 Bergisch-Gladbach (DE)

(74) Vertreter : Mehl, Ernst, Dipl.-Ing. et al
Postfach 22 13 17
D-8000 München 22 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Abgaskatalysator-Trägerkörper nach dem Oberbegriff des ersten Anspruchs, wie er beispielsweise in der DE-A-29 24 592.9 beschrieben wird. Solche Abgaskatalysator-Trägerkörper werden mit einer katalytisch wirkenden Beschichtung zur Reinigung von Abgasen in Kraftfahrzeugen eingesetzt und sind hohen mechanischen und thermischen Belastungen ausgesetzt. Es ist daher sehr schwierig, mechanisch genügend feste und über lange Zeit haltbare Trägerkörper herzustellen. Aus verschiedenen Gründen, insbesondere wegen der Korrosionsbeständigkeit ist es wünschenswert, daß die verwendeten Stahlbleche einen hohen Aluminiumanteil enthalten, was jedoch technisch wegen der schlechten Walzbarkeit von Stahl mit hohem Aluminiumanteil und wegen der daraus entstehenden Kosten zu Problemen führt. Weiterhin sind die fügetechnischen Verbindungen der Berührungsstellen zwischen den einzelnen Blechen problematisch, da diese hochbelasteten Stellen je nach Art der Verbindung wegen thermischen Belastungen oder wegen Erosion Schwachstellen sein können.

Aufgabe der vorliegenden Erfindung ist ein Abgaskatalysator-Trägerkörper der aus preiswert verfügbarem Stahlblech mit geringem Aluminiumanteil gewickelt wird, der jedoch in fertigem Zustand in seinem Strukturmaterial zumindest in Teilbereichen an den fügetechnischen Verbindungsstellen und ggf. an den Oberflächen einen größeren Aluminiumanteil aufweist als das Grundmaterial des verwendeten Ausgangsbleches. Weiterhin ist die Aufgabe der Erfindung ein Verfahren zur Herstellung eines solchen Abgaskatalysator-Trägerkörpers und die Herstellung von dauerhaften fügetechnischen Verbindungsstellen.

Zur Lösung dieser Aufgabe wird im Anspruch 1 ein Verfahren zur Herstellung eines erfindungsgemäßen Abgaskatalysator-Trägerkörpers nach Anspruch 9 vorgeschlagen. Dazu wird der Abgaskatalysator-Trägerkörper zunächst in an sich bekannter Weise aus geeignet strukturierten Blechen gewickelt oder geschichtet, wobei als Ausgangsmaterial ein handelsübliches z. B. chromhaltiges Stahlblech ohne oder mit einem geringen Aluminiumanteil verwendet wird. Vor, bei und/oder nach dem Wickeln oder Schichten wird der Abgaskatalysator-Trägerkörper mit einem im wesentlichen aus Aluminium bestehenden Zusatzmaterial versehen. Anschließend wird der mit Zusatzmaterial versehene Abgaskatalysator-Trägerkörper für einige Zeit über den Schmelzpunkt des Aluminiums im Vakuumofen aufgeheizt. Auf diese Weise schmilzt das Aluminium, benetzt die Oberflächen und läuft z. B. in die Spalten in der Nähe der Berührungsstellen hinein und bildet, wie dies auch bei einem Lot der Fall wäre, Verbindungsbrücken. Außerdem beginnt das Aluminium überall in den Stahl hineinzudiffundieren, wodurch der Aluminiumanteil des Stahls nachträglich deutlich erhöht werden kann.

In weiterer Ausgestaltung der Erfindung wird gemäß Anspruch 2 als Zusatzmaterial Aluminiumpulver verwendet, welches auf die Oberflächen des Trägerkörpers aufgebracht wird, wobei möglichst viel Aluminiumpulver in die Spalten in der Nähe der Berührungsstellen der Bleche eingebracht wird, sei es unter Verwendung von Kleber, Binder, Haftkleber oder auf andere Weise. Die möglichen Methoden für das Aufbringen von Aluminiumpulver entsprechen den für das Aufbringen von Lot bekannten Maßnahmen.

Wenn der Abgaskatalysator-Trägerkörper so hoch erhitzt wird, daß der erniedrigte Schmelzpunkt der durch in den Stahl eindiffundierendes Aluminium entstehenden örtlich aluminiumreichen Aluminium-Stahl-Legierung erreicht wird, ergeben sich zusammenschmelzende Verbindungsstellen in den Berührungsbereichen. Hier ist von Bedeutung, daß der Schmelzpunkt einer Aluminium-Stahl-Legierung niedriger ist als der von reinem Stahl. Da das Aluminium das Bestreben hat, in den Stahl einzudiffundieren, entsteht in der Nähe der Stellen, wo sich genügend Aluminium befindet, sehr schnell eine Legierung mit hohem Aluminiumanteil, welche einen relativ niedrigen Schmelzpunkt hat. Wird die Temperatur genügend hoch gewählt, so kann auf diese Weise eine sehr viel innigere Verbindung hergestellt werden, als dies beim Löten der Fall ist.

In weiterer Ausgestaltung dieses Gedankens wird im Anspruch 3 vorgeschlagen, die hohe Temperatur solange beizubehalten, bis das Aluminium überall in den Stahl eindiffundiert ist und bis aus den örtlich aluminiumreichen Legierungszonen so viel Aluminium in die angrenzende Struktur wegdiffundiert ist, daß der Schmelzpunkt dieser Stellen wieder oberhalb der herrschenden Temperatur liegt und diese somit erstarren. Das Aluminium hat natürlich das Bestreben, von seinem ursprünglichen Ort der Aufbringung überall hin in den Stahl hineinzudiffundieren. Die örtlich aluminiumreiche Legierung wird daher in Abhängigkeit von der Zeit durch die hohe Aluminium-Diffusionsgeschwindigkeit wieder weniger aluminiumhaltig, wodurch der Schmelzpunkt steigt. Auch nach Erstarren der Verbindungsstellen diffundiert Aluminium noch weiter in den Stahl. Es kann daher durch entsprechend langes Beibehalten einer hohen Temperatur der Schmelzpunkt der Verbindungsstellen wieder erheblich angehoben werden, wobei gleichzeitig der übrige Stahl zur Stabilisierung seiner Hochtemperatur-Korrosionsfestigkeit mit Aluminium angereichert wird.

Dies kann gemäß dem Vorschlag in Anspruch 4 dazu ausgenutzt werden, daß die hohe Temperatur so lange beibehalten wird, bis das aufgebrachte Aluminium im wesentlichen gleichmäßig im Stahl verteilt ist. Ein so behandelter Abgaskatalysator-Trägerkörper hat in Bezug auf Hochtemperatur-Korrosion wesentlich verbesserte Eigenschaften, da durch dieses Verfahren der Aluminiumanteil des Grundwerkstoffes, z. B. in Oberflächennähe, auf Werte größer als 6 % gesteigert werden kann, beispielsweise auf 10 %-20 % oder auch darüber. Stahlwerkstoffe mit ähnlich hohen Aluminiumanteilen lassen sich wegen ihrer Sprödigkeit werktechnisch nicht mehr verarbeiten und somit auch nicht direkt zur Herstellung von Katalysator-Trägerkörpern verwenden.

Gemäß den Ansprüchen 5 und 6 wird weiterhin vorgeschlagen, daß die als Zusatz verwendeten Materialien außer Aluminium noch Anteile anderer zur Verbesserung der Hochtemperaturfestigkeit oder anderer Eigenschaften beitragender Elemente, z. B. Yttrium, Zirkon oder Cer, enthalten bzw. mit diesen gemischt sind. Dadurch können zusätzliche Verbesserungen z. B. der Korrosionsfestigkeit erreicht werden.

Im Anspruch 7 wird ein anderes Verfahren zur Beibringung von zusätzlichem Aluminium vorgeschlagen. Dazu wird der Trägerkörper aus mehrschichtigen Blechen aufgebaut, wobei die Bleche jeweils mindestens eine Schicht vorwiegend aus Aluminium besitzen. Beim späteren Erhitzen diffundiert das Aluminium dann, wie beschrieben, in den Stahl ein und erhöht so nachträglich dessen Aluminiumanteil.

Im Anspruch 8 wird insbesondere vorgeschlagen, den Trägerkörper aus jeweils dreischichtigen Blechen aufzubauen, wobei jeweils eine Aluminiumfolie von zwei Stahlblechschichten umgeben ist. Das Einbringen des Zusatzaluminiums als Folie zwischen zwei Stahlbleche ist bei der späteren Verwendung des Trägerkörpers von Vorteil, da die aluminiumreiche Schicht im Inneren der ursprünglich dreilagigen Bleche liegt und damit nicht direkt mit dem Sauerstoff der Umgebung reagieren kann. Sie dient als Aluminiumdepot für die Aluminiumdiffusionsanreicherung der das mehrschichtige Verbundstrukturblech nach außen hin abgrenzenden Stahlblechoberflächen. Dies bringt Vorteile durch selbstregenerierende Ausheilungseffekte der schützenden $Al_2O_3$-Schicht bei thermischer Wechselbelastung des Trägerkörpers, bei der die äußere schützende Aluminiumoxidschicht beschädigt werden kann. Zum Verlöten der Bleche an ihren Berührungsstellen kann, wie oben beschrieben, Aluminiumpulver eingesetzt werden. Es ist aber auch die Verwendung eines anderen Lots, z. B. Nickel-Lot, möglich, da das Zusatzaluminium schon durch die Folien eingebracht ist.

Ferner wird im Anspruch 9 ein entsprechend hergestellter Abgaskatalysator-Trägerkörper vorgeschlagen. Dazu ist ein Abgaskatalysator-Trägerkörper zunächst in einer der bekannten Weisen aus dünnen Blechen geschichtet oder aufgewickelt, wobei die Bleche gewellt, glatt oder sonstwie strukturiert sein können. Auf diese Weise entstehen gasdurchlässige Körper mit großer Oberfläche und vielen Berührungsstellen zwischen den geschichteten bzw. aufgewickelten Stahlblechen. Bisher ist es bekannt, daß diese Verbindungsstellen alle oder teilweise fügetechnisch verbunden sind, beispielsweise mit Hilfe eines geeigneten Lotes verlötet. Erfindungsgemäß wird nunmehr vorgeschlagen, daß die Verbindungsstellen, bzw. nach Anspruch 10 auch der Strukturwerkstoff, zumindest in Teilbereichen, z. B. in Oberflächennähe, durch die Einbringung eines Zusatzmaterials nach der Verformung in die sich im Wickelzustand an ihren Oberflächen berührenden Ausgangsbleche einen großen Aluminiumanteil aufweisen, wodurch eine besondere Art der Verbindung bzw. eine erhöhte Korrosionsbeständigkeit erreicht wird. Die Vorteile des erfindungsgemäßen Herstellungsverfahrens von Metallträgerkörpern für Katalysatoren werden im folgenden und anhand der Zeichnungen noch näher erläutert.

In Anspruch 11 wird weiterhin vorgeschlagen, daß der erfindungsgemäße Trägerkörper eine dickwandigere Grundstruktur haben soll als ansonsten üblich. Die Bleche, aus denen der Körper gewickelt bzw. geschichtet ist, sollten jeweils eine Dicke zwischen 0,06 mm und 0,3 mm haben. Die Bleche der dickwandigeren Grundstruktur können hierzu auch jeweils aus einer mehrschichtigen Verbund-Konstruktion dünnerer Materialschichten bestehen.

Die Verwendung von dickwandigeren Grundstrukturen kann bei einer Temperaturwechselbeanspruchung dazu beitragen, die Haltbarkeit des Körpers zu erhöhen und unerwünschte Längendehnungen zu vermeiden.

Die sich an der Oberfläche auf einem Metallwerkstoff mit hohem Aluminiumgehalt bildende Aluminiumoxidschicht (auf der noch die den Katalysator tragende keramische Beschichtung aufgebracht wird) wird durch eine dickwandigere Grundstruktur besser stabilisiert.

Das beschriebene Verfahren wird anhand der Zeichnung näher erläutert. Es zeigen

Fig. 1 einen schematischen Querschnitt durch eine typische Berührungsstelle zwischen zwei Blechen vor der Erhitzung,

Fig. 2 die gleiche Stelle nach dem Schmelzen und

Fig. 3 einen Querschnitt durch einen aus geschichteten Blechen aufgebauten Trägerkörper im Ausschnitt.

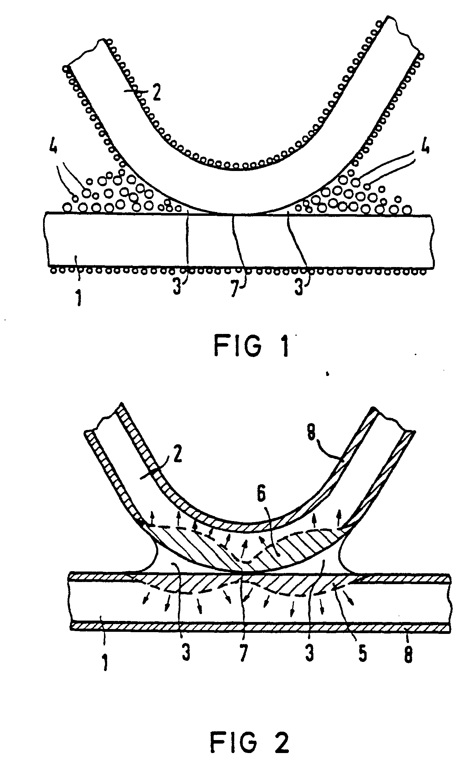

Fig. 1 zeigt einen Querschnitt durch eine Berührungsstelle zwischen einem glatten Blechstreifen 1 und einem gewellten Blechstreifen 2. Eine solche Berührungsstelle 7 weist üblicherweise an den Seiten enge Spalten 3 auf, in welche zur Herstellung einer fügetechnischen Verbindung ein Zusatzmaterial mit einer geeigneten Methode eingebracht werden muß. In diesem Falle sind Aluminiumkörner 4 mit einer geeigneten Methode auf die Blechoberflächen und in die Spalten 3 eingebracht worden, so daß genügend Legierungsmaterial in der Nähe der Berührungsstelle 7 vorhanden ist.

Wie in Fig. 2 schematisch angedeutet, geschieht beim Aufheizen etwa folgendes :

Die Aluminiumkörner 4 auf den Blechen 1, 2 und insbesondere in den Spalten 3 schmelzen, benetzen die Oberfläche und fließen ineinander. Dabei beginnt das Aluminium sofort in den Stahl einzudiffundieren, so daß sich Zonen 5, 6, 8 in den Blechen 1, 2 bilden, welche einen hohen Aluminiumanteil aufweisen. Diese örtlich aluminiumreichen Aluminium-Stahl-Legierungen haben einen wesentlich niedrigeren Schmelzpunkt als Stahl, so daß sich auch diese Zonen 5, 6 vorübergehend verflüssigen. Es entsteht so eine sehr innige Verbindung in der Nähe der Berührungsstelle 7, welche im Idealfall nahezu die Eigenschaften einer Schweißverbindung aufweist, da die Stahlbleche vor der Verbindung direkt aneinanderliegen. Das Aluminium diffundiert bei hoher Temperatur natürlich weiter, wie mit Pfeilen angedeutet, in den Stahl hinein, wodurch der Schmelzpunkt der Zonen 5, 6 sich wieder erhöht und die Verbindungsstelle erstarrt. Die so geschaffene Verbindung ist außerordentlich stabil und die Verbindungsmethode hat zusätzlich den Vorteil, daß der Stahl mit Aluminium angereichert werden kann, was für die Korrozionseigenschaft von Vorteil ist. Es sei noch darauf hingewiesen, daß die Zeichnung nur schematisch und keinesfalls maßstabgerecht in Bezug auf die Eindringtiefe des Aluminiums ist.

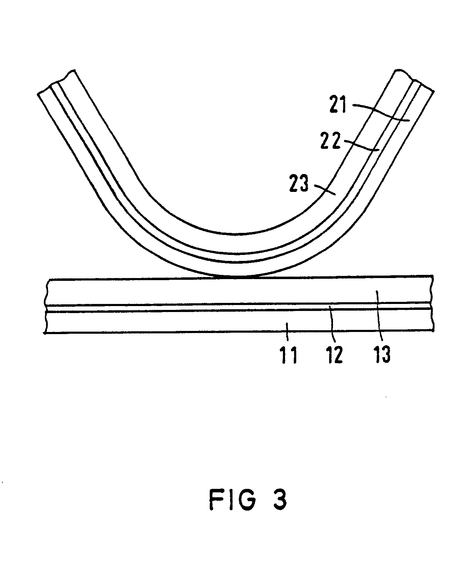

Fig. 3 zeigt im Ausschnitt einen Querschnitt durch einen aus geschichteten Blechen aufgebauten Trägerkörper vor dem Erhitzen. Sowohl das glatte wie auch das gewellte Band des ansonsten wie bekannt aufgebauten Trägerkörpers bestehen aus drei Schichten. Zwischen zwei Lagen Stahlbleches (z. B. das unter dem Handelsnamen « Aluchrom S » bekannte) befindet sich eine dünne Lage Aluminium oder Aluminiumbasislegierung.

Das glatte Band besteht somit aus einer Lage 11 Stahlblech, einer Lage 12 Aluminiumfolie und einer Lage 13 wiederum Stahlblech. Entsprechend ist auch das gewellte Band aus drei Lagen 21, 22, 23 geschichtet. Gelötet werden kann ein solcherart aufgebauter Körper entweder, wie oben beschrieben, mit Aluminium-Lot oder mit anderem Lot, beispielsweise Nickel-Lot.

Mit Hilfe der vorliegenden Erfindung kann ein langlebiger und besonders hochtemperatur-stabiler Abgaskatalysator-Trägerkörper hergestellt werden.

**Patentansprüche**

1. Verfahren zur Herstellung eines Abgaskatalysator-Trägerkörpers, bei dem der Trägerkörper aus gewellten (2) und/oder im wesentlichen glatten (1) chromhaltigen Stahlblechen mit einem Aluminiumanteil kleiner 6 % gewickelt oder geschichtet wird und zum Verbinden der Bleche ein metallisches Material aufgetragen und der Trägerkörper im Vakuum oder unter Schutzgas aufgeheizt wird, dadurch gekennzeichnet, daß vor, bei und/oder nach dem Wickeln oder Schichten der Trägerkörper mit einem im wesentlichen aus Aluminium bestehenden Zusatzmaterial (4 ; 12, 22) versehen wird und der Trägerkörper auf eine über dem Schmelzpunkt des Aluminiums liegende Temperatur aufgeheizt wird, die die Diffusion des Aluminiums in das Stahlblech ermöglicht.

2. Verfahren nach Anspruch 1, dadurch gekennzeichnet, daß das Zusatzmaterial Aluminiumpulver (4) ist, welches nach dem Wickeln auf die Oberflächen des Trägerkörpers aufgebracht wird, wobei möglichst viel Aluminiumpulver in die Spalten (3) in der Nähe der Berührungsstellen (7) der Bleche (1, 2) eingebracht wird, beispielsweise unter Verwendung von Kleber, Binder oder Haftkleber.

3. Verfahren nach Anspruch 1 oder 2, dadurch gekennzeichnet, daß die über dem Schmelzpunkt des Aluminiums liegende Temperatur solange beibehalten wird, bis das Aluminium überall in den Stahl eindiffundiert ist und bis aus den örtlich aluminiumreichen Legierungen so viel Aluminium wegdiffundiert ist, daß der Schmelzpunkt dieser Stellen wieder oberhalb der herrschenden Temperatur liegt und diese somit erstarren.

4. Verfahren nach Anspruch 1, 2 oder 3, dadurch gekennzeichnet, daß die über dem Schmelzpunkt des Aluminiums liegende Temperatur solange beibehalten wird, bis das eingebrachte Aluminium im wesentlichen gleichmäßig im Stahl verteilt ist, wobei Aluminium-Anteile von mehr als 6 %, vorzugsweise 10 bis 25 % erreicht werden können.

5. Verfahren nach einem der Ansprüche 1 bis 4, dadurch gekennzeichnet, daß das eingebrachte, vorwiegend aus Aluminium bestehende Zusatzmaterial Anteile anderer, die Hochtemperatur-Korrosionsfestigkeit verbessernder Elemente enthält.

6. Verfahren nach Anspruch 5, dadurch gekennzeichnet, daß mindestens eines der Elemente aus der Gruppe Yttrium, Zirkon und Cer zur Verbesserung der Hochtemperatur-Korrosionsfestigkeit enthalten ist.

7. Verfahren nach Anspruch 1, dadurch gekennzeichnet, daß der Abgaskatalysator-Trägerkörper aus Blechen gewickelt bzw. geschichtet wird, welche ihrerseits aus zwei oder mehr Schichten (11, 12, 13, 21, 22, 23) bestehen, wobei mindestens eine (12, 22) dieser Schichten jeweils vorwiegend aus Aluminium besteht.

8. Verfahren nach Anspruch 1 oder 7, dadurch gekennzeichnet, daß der Abgaskatalysator-Trägerkörper aus jeweils 3 schichtigen Blechen (11, 12, 13 und 21, 22, 23) gewickelt bzw. geschichtet wird, wobei jeweils eine Aluminiumfolie (12 ; 22) von zwei Stahlblechschichten (11, 13 ; 21, 23) umgeben ist.

9. Abgaskatalysator-Trägerkörper aus insbesondere spiralförmig gewickelten oder geschichteten gewellten (2) und/oder im wesentlichen glatten (1) Blechen aus hochtemperaturfestem Stahl, wobei die Berührungsstellen (7) der Bleche alle oder teilweise durch Wärmeeinwirkung hergestellte metallische Verbindungen sind, dadurch gekennzeichnet, daß zumindest die Verbindungsstellen einen Aluminiumanteil größer als 6 % aufweisen.

10. Abgaskatalysator-Trägerkörper nach Anspruch 9, dadurch gekennzeichnet, daß das Strukturmaterial zumindest in Oberflächennähe ebenfalls einen Aluminiumanteil größer 6 % aufweist.

11. Abgaskatalysator-Trägerkörper nach Anspruch 9 oder 10, dadurch gekennzeichnet, daß die Bleche (1, 2) eine Dicke von mehr als 0,04 mm aufweisen, vorzugsweise 0,06 bis 0,30 mm.

## Claims

1. Method for manufacturing an exhaust gas catalyst-carrier body in which the carrier body is wound or layered from corrugated (2) and/or essentially smooth (1) chromiferous steel sheets with a proportion of aluminium which is less than 6 % and, for binding the sheets, a metallic material is applied and the carrier body is heated in a vacuum or in inert gas, characterised in that before, during and/or after winding or layering, the carrier body is provided with a filler material (4 ; 12, 22) consisting essentially of aluminium and the carrier body is heated to a temperature lying above the melting point of the aluminium, which enables diffusion of the aluminium into the steel sheet.

2. Method according to claim 1, characterised in that the filler material is aluminium powder (4) which, after the winding, is coated onto the surfaces of the carrier body, whereby as much aluminium powder as possible is introduced into the gaps (3) in the proximity of the points of contact (7) of the sheets (1, 2), for example using adhesives, binders or contact adhesives.

3. Method according to claim 1 or 2, characterised in that the temperature lying above the melting point of the aluminium is maintained until the aluminium is diffused into all parts of the steel and until so much aluminium is diffused away from the alloys, which are locally rich in aluminium, that the melting point of these points again lies above the prevailing temperature and these solidify.

4. Method according to claim 1, 2 or 3, characterised in that the temperature lying above the melting point of the aluminium is maintained as long as the introduced aluminium is distributed substantially evenly in the steel, whereby aluminium proportions of more than 6 %, preferably 10 to 25 % can be obtained.

5. Method according to one of claims 1 to 4, characterised in that the filler material introduced, mainly consisting of aluminium, contains proportions of other elements improving the high-temperature corrosion-resistance.

6. Method according to claim 5, characterised in that at least one of the elements from the group yttrium, zirconium and cerium is included for improving the high-temperature-corrosion resistance.

7. Method according to claim 1, characterised in that the exhaust gas catalyst-carrier body is wound or layered from sheets, which, for their part, consist of two or more layers (11, 12, 13, 21, 22, 23), whereby at least one (12, 22) of these layers consists in each case mainly of aluminium.

8. Method according to claim 1 or 7, characterised in that the exhaust gas catalyst-carrier body is wound or layered from, in each case, three-layered sheets (11, 12, 13 and 21, 22, 23), whereby in each case one aluminium foil (12 ; 22) is enclosed by two steel sheet layers (11, 13 ; 21, 23).

9. Exhaust gas catalyst-carrier body especially of spirally formed wound or layered corrugated (2) and/or essentially smooth (1) sheets of high-temperature resistant steel, whereby the points of contact (7) of the sheets are all, or partly, of metallic compounds produced by heat reaction, characterised in that at least the junction points have a proportion of aluminium which is greater than 6 %.

10. Exhaust gas catalyst-carrier body according to claim 9, characterised in that the structural material also has, at least in the proximity of its surface, a proportion of aluminium which is greater than 6 %.

11. Exhaust gas catalyst-carrier body according to claim 9 or 10, characterised in that the sheets (1, 2) have a thickness of more than 0.04 mm, preferably 0.06 to 0.30 mm.

## Revendications

1. Procédé de fabrication d'un support de catalyseur de gaz d'échappement qui consiste à enrouler ou à empiler le support en tôles d'acier au chrome ondulées (2) et/ou sensiblement planes (1) et ayant une proportion d'aluminium inférieure à 6 % et à déposer un matériau métallique pour relier les tôles et à chauffer le support sous vide et/ou sous gaz protecteur, caractérisé en ce qu'il consiste à munir le support avant, pendant et/ou après l'enroulement ou l'empilage, d'un additif (4 ; 12, 22) constitué pour l'essentiel d'aluminium et à porter le support à une température supérieure au point de fusion de l'aluminium, qui permet la diffusion de l'aluminium dans la tôle d'acier.

2. Procédé suivant la revendication 1, caractérisé en ce que l'additif est de la poudre d'aluminium (4) qui est déposée après l'enroulement sur les surfaces du support, autant de poudre d'aluminium que possible étant déposée dans les fentes (3) à proximité des points de contact (7) des tôles (1, 2), par exemple en utilisant des colles, des liants ou des adhésifs.

3. Procédé suivant la revendication 1 ou 2, caractérisé en ce qu'il consiste à maintenir la température supérieure au point de fusion de l'aluminium jusqu'à ce que l'aluminium ait diffusé partout dans l'acier et jusqu'à ce que tant d'aluminium soit sorti par diffusion des alliages riches en aluminium localement que le point de fusion de ces emplacements soit à nouveau supérieur à la température qui règne et que ceux-ci se solidifient.

4. Procédé suivant la revendication 1, 2 ou 3, caractérisé en ce qu'il consiste à maintenir la température supérieure au point de fusion de l'aluminium jusqu'à ce que l'aluminium introduit soit réparti d'une manière sensiblement uniforme dans l'acier, des proportions d'aluminium supérieures à 6 % et de préférence de 10 à 25 %

pouvant être obtenues.

5. Procédé suivant l'une des revendications 1 à 4, caractérisé en ce que l'additif introduit, constitué d'une manière prépondérante d'aluminium, contient des proportions d'autres éléments améliorant la résistance à la corrosion à une température élevée.

6. Procédé suivant la revendication 5, caractérisé par une teneur en l'un au moins des éléments du groupe de l'yttrium, du zirconium et du cérium destinés à améliorer la résistance à la corrosion à une température élevée.

7. Procédé suivant la revendication 1, caractérisé en ce que le corps de support du catalyseur des gaz d'échappement est constitué par des tôles enroulées ou empilées, qui à leur tour sont constituées de deux ou de plusieurs couches (11, 12, 13, 21, 22, 23) l'une (12, 22) au moins de ces couches étant d'une manière prépondérante en aluminium.

8. Procédé suivant la revendication 1 ou 7, caractérisé en ce que le corps de support du catalyseur des gaz d'échappement est constitué par des tôles à trois couches (11, 12, 13 et 21, 22, 23), enroulées ou empilées une feuille d'aluminium (12, 22) étant entourée de deux couches de tôle d'acier (11, 13, 21, 23).

9. Support de catalyseur pour gaz d'échappement, en tôle en acier résistant à une température élevée ondulée (2) et/ou sensiblement plane (1), notamment enroulée en forme de spirale ou empilée, les points de contact (7) des tôles étant en tout ou partie des liaisons métalliques réalisées par l'action de la chaleur, caractérisé en ce qu'au moins les points de liaison ont une teneur en aluminium supérieure à 6 %.

10. Support de catalyseur pour gaz d'échappement suivant la revendication 9, caractérisé en ce que le matériau de structure a, au moins à proximité de la surface, une proportion d'aluminium supérieure à 6 %.

11. Support de catalyseur pour gaz d'échappement suivant la revendication 9 ou 10, caractérisé en ce que les tôles (1, 2) ont une épaisseur supérieure à 0,04 mm et de préférence de 0,06 à 0,30 mm.

FIG 1

FIG 2

FIG 3